# EUROPÄISCHE PATENTSCHRIFT

(11) **EP 1 978 272 B1**
(45) Veröffentlichungstag und Bekanntmachung des Hinweises auf die Patenterteilung: **01.02.2012**
(21) Anmeldenummer: 08006178.1
(22) Anmeldetag: 28.03.2008
(51) Int. Cl.: F16D 65/14

(54) **Elektromechanisch betätigte Scheibenbremse mit Betätigungsstößel**
Electromechanically actuated disc brake with actuation ram
Frein à disque électromécanique doté d'un poussoir d'actionnement

(30) Priorität: 05.04.2007 DE 102007016486
(43) Veröffentlichungstag der Anmeldung: 08.10.2008
(73) Patentinhaber: KNORR-BREMSE Systeme für Nutzfahrzeuge GmbH, 80809 München (DE)
(72) Erfinder: Pericevic, Aleksandar, 82327 Tutzing (DE); Baumgartner, Johann, 85368 Moosburg (DE); Trimpe, Robert, 82234 Weßling (DE); Geissler, Steffen, 63110 Rodgau (DE); Stöhr, Markus, 70567 Stuttgart (DE); Seidenschwang, Matthias, 81249 München (DE); Pitzing, Stephan, 81675 München (DE); Gruber, Robert, 83539 Pfaffing (DE)
(74) Vertreter: Mattusch, Gundula

(56) Entgegenhaltungen:
- WO-A1-02/10609
- DE-B3- 10 319 082
- US-A1- 2006 175 163

## Beschreibung

Die Erfindung betrifft eine elektromechanisch betätigte Scheibenbremse in selbstverstärkender Bauart nach dem Oberbegriff des Anspruchs 1.

Scheibenbremsen, welche den Leistungsbedarf des Antriebs durch die Nutzung von Selbstverstärkungseffekten reduzieren, sind langem bekannt.

Typische Beispiele derartiger Bremsen sind z.B. in der DE 101 56 348 C1, in der DE 101 39 913.8 und in der DE 10 2005 030 618.7 beschrieben.

Bremsen dieser Bauart ist gemeinsam, dass die Abstützung der auf den Bremsbelag wirkenden Umfangskräfte über ein Keil- oder ein Rampensystem erfolgt, welches die Selbstverstärkung bewirkt.

Dabei wird die auf den Bremsbelag wirkende Reibkraft von einem mit dem Bremsbelag verbundenen und mit diesem in Umfangsrichtung verschieblichen Teil der Selbstverstärkungs-Einrichtung über Rollkörper oder mittels Gleitkontakt auf einen in Umfangsrichtung stationären Teil, zum Beispiel einen Keilmechanismus, der Selbstverstärkungseinrichtung übertragen.

Daraus ergibt sich bei verschieblich oder schwenkverschieblich geführten Betätigungsstößeln eine Relativbewegung zwischen Bremsbelag bzw. Belagdruckplatte und Betätigungsstößel(n).

Hierbei existiert ein Problem, das im Folgenden beschrieben wird.

Bei selbstverstärkenden Scheibenbremsen ist zur Realisierung der Selbstverstärkung eine Verschiebung des Bremsbelages in Drehrichtung der Bremsscheibe erforderlich, wobei bei Beginn der Betätigung der Betätigungsstößel im Bereich der Lüftspielüberwindung der Bremsbelag zunächst nur senkrecht auf die Bremsscheibe hin bewegt wird. Als Folge dessen entsteht zwischen den Rollkörpern und mit ihnen zusammenwirkenden Rampenflächen bei einem Keilmechanismus einer Selbstverstärkungseinrichtung ein Spiel. Erst bei Anlegen des Bremsbelages an die Reibfläche der rotierende Bremsscheibe wird durch die entstehende Reibkraft der Bremsbelag in Umfangsrichtung der Bremsscheibe mitgezogen, was zu einem schlagartigen Anlegen der Rollkörper an die Rampenflächen des Keilmechanismus führt. Dieser Vorgang kann Geräusche, unnötigen Verschleiß im Keilmechanismus sowie ruckartiges Ansprechen der Bremse hervorrufen.

Bei einer weiteren, aus US 2006/175163 bekannten Bremse wird schlagartige Anlegen durch eine zuzätzliche, in Umfangsrichtung wirkende Feder vermieden, was jedoch einen konstruktiven Aufwand darstellt.

Vor diesem Hintergrund ist es die Aufgabe der Erfindung, die oben beschriebenen Nachteile bei selbstverstärkenden Scheibenbremsen, insbesondere der gattungsgemäßen Art, aufzuheben bzw. erheblich zu verringern.

Die Erfindung löst diese Aufgabe durch den Gegenstand des Anspruchs 1.

Vorteilhafte Ausgestaltungen sind den Unteransprüchen zu entnehmen.

Nach dem Gegenstand des Anspruchs 1 sind der zuspannseitige Bremsbelag oder eine Bremsbelageinheit, die aus dem zuspannseitigen Bremsbelag und der Druckplatte besteht, ständig in Umfangsrichtung mit einer Federkraft wenigstens einer Feder beaufschlagt. Vorzugsweise entspricht die Richtung der Federkraft der Feder der Drehrichtung der Bremsscheibe bei Vorwärtsfahrt des Fahrzeugs, in dem diese Bremsscheibe angeordnet ist.

Durch diese Maßnahme wird erreicht, dass bei Betätigung der Bremse auch schon im Bereich der Lüftspielüberwindung eine Umfangskraft auf die Bremsbelageinheit einwirkt, welche die Druckplatte bei der Betätigung in Normalrichtung so weit in Umfangsrichtung der Bremsscheibe verschiebt, dass ein ständiger Kontakt zwischen Rollkörpern und Rampenflächen des Keilsystems erhalten bleibt.

Die Erfindung verwendet hierbei eine den Betätigungsstößel umhüllende Feder, welche zwischen einem auf der Seite der Bremsscheibe angeordneten gehäusefesten, d.h. bremssattelfesten, Auflager und einer der Bremsscheibe abgewandten mit dem Betätigungsstößel verbundenen Anlage angeordnet ist, um die notwendige Kraft in Umfangsrichtung der Bremsscheibe zu erzeugen.

Dazu ist zumindest das gehäusefeste Auflager der Feder mit einer Schräge, deren Auflagerfläche in einer Ebene in einem Winkel α größer 0°, insbesondere zwischen 1 und 30°, besonders bevorzugt zwischen 5 und 20°, zur Drehebene der Bremsscheibe winklig verläuft, versehen. Somit wird mittels der vorhandenen Feder die Umfangskraft zur Sicherstellung des Kontakts zwischen Rollkörpern und Rampenflächen vorteilhaft einfach erzeugt.

Diese vorteilhafte Integration der Funktion der Feder, die zur Rückstellung der Bremsbelageinheit und zur Vorspannungserzeugung in der Bremse vorhanden ist, wird die erforderliche Umfangskraft durch geeignete Anordnung dergestalt erzeugt, dass die auf den Betätigungsstößel in Normalrichtung einwirkende Rückstellkraft der Feder, die vorzugsweise ein Druckfeder ist, am Betätigungsstößel eine in Umfangsrichtung wirkende Komponente so erzeugt, dass der mit der Bremsbelageinheit verbundene Betätigungsstößel mit einer ausreichend hohen Querkraft auf die Bremsbelageinheit wirkt.

Der Begriff des Betätigungsstößels bzw. Betätigungsstempels ist nicht zu eng zu fassen. Er umschließt insbesondere auch längeveränderliche Baueinheiten aus mehreren Elementen.

Ein besonderer Vorteil dieser Lösung liegt darin, dass die Feder zur Rückstellung im Inneren, im geschützten Bereich der Bremse angeordnet ist, wohingegen separate, direkt auf den Bremsbelag einwirkende Umfangskraft erzeugende Federn zwangsläufig außerhalb angeordnet wären und zusätzlicher Schutzmaßnahmen bedürften.

Die Erzeugung der Umfangskraftkomponente der Rückstellfeder erfolgt vorzugsweise, indem die Feder an einer oder gegebenenfalls auch an beiden Auflageflächen schräg, das heißt: nicht rechtwinklig, zu ihrer Längsachse, abgestützt ist.

Die Feder weist auf Grund ihres relativ großen Auflagedurchmessers eine stark ausrichtende Wirkung auf den Betätigungsstößel aus. Die erfindungsgemäße Lösung nutzt die Richtwirkung der Feder aus. Durch die schräge Auflage der Feder wird vorteilhaft erreicht, dass das Einspannmaß der Feder auf einer Seite geringer ist als auf der gegenüber liegenden Seite. Folglich bewirkt die Feder, dass der Betätigungsstößel, der in zwei Gelenkpunkten verschwenkbar angeordnet ist, um seine Gelenkpunkte verschwenkt. Dabei übt er in seinem Verbindungsgelenk mit dem Bremsbelag eine parallel zur Bremsscheibe, also in Umfangsrichtung, wirkende Kraft auf die Bremsbelageinheit aus. Bei einer Betätigung der Bremse bewirkt diese Umfangskraft, dass bei Bewegung der Belageinheit in Richtung der Bremsscheibe die Belageinheit gleichzeitig so weit in Umfangsrichtung verschoben wird, dass ein ständiger Kontakt der Rollkörper mit den Rampenflächen des Keilsystems erhalten bleibt. Bei Anlegen des Bremsbelags an die Reibfläche der Bremsscheibe erfolgt somit keine schlagartige Bewegung der Belageinheit, sondern ein weicher Anstieg der Bremskraft.

Diese mit vorteilhaft sehr einfachen Mitteln erzielte Lösung der Aufgabe ist drehrichtungsabhängig. Das heißt, die Richtung der Umfangskraftkomponente des Betätigungsstößels wird ausschließlich auf die Vorwärtsfahrt-Drehrichtung der Bremsscheibe abgestimmt. Bei Rückwärtsfahrt ist das Anlegeproblem noch vorhanden. Auf Grund der geringen Häufigkeit von Rückwärtsfahrvorgängen, beispielsweise bei Kraftfahrzeugen, welche überdies mit geringen Fahrgeschwindigkeiten ausgeführt werden, ist dieses Problem jedoch vernachlässigbar.

Alternativ zu einer schrägen Auflage kann auch die Rückstellfeder mit schrägen Federenden ausgeführt sein, wodurch kein weiteres Einbauteil erforderlich ist, was ein Vorteil für eine geringe Bauteilezahl ist.

Auch eine Anordnung der Feder mit schräg zum Betätigungsstößel liegender Längsachse zur Erzielung des Umfangskrafteffektes ist möglich, was bei bestimmten Bremsbauarten von Vorteil ist.

Nachfolgend wird die Erfindung anhand eines Ausführungsbeispiels näher beschrieben. Es zeigen:
- Fig. 1: eine erste Schnittansicht einer Schiebesattel-Scheibenbremse;
- Fig. 2: eine weitere Schnittansicht der Scheibenbremse aus Fig. 1; und
- Fig. 3: eine vergrößerte Teilschnittansicht der Scheibenbremse aus Fig. 2.

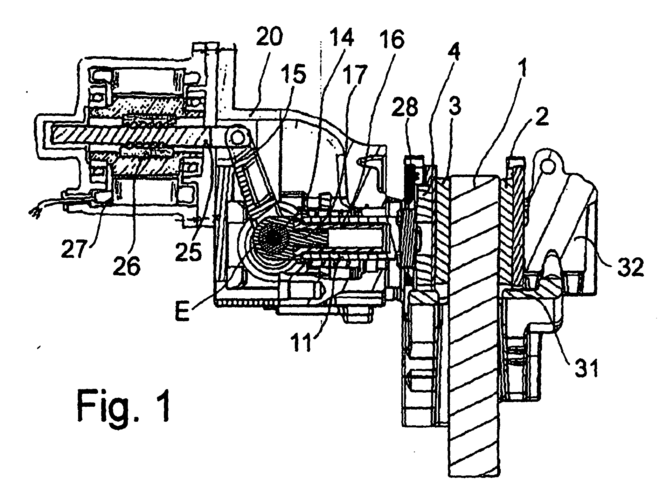

Fig. 1 zeigt eine (Teilbelag-) Schiebesattel-Scheibenbremse, mit beidseits einer Bremsscheibe 1 angeordneten Bremsbelägen 2 und 3.

Die Ausführung als Schiebsattel-Scheibenbremse ist eine mögliche Bauform. Ausgestaltungen als Schwenksattel-Scheibenbremse oder als Festsattel-Scheibenbremse oder Mischformen der Bauarten sind denkbar, hier aber nicht dargestellt.

Die Schiebesattel-Scheibenbremse weist einen die Bremsscheibe 1 im Umfangsrandbereich übergreifenden ein oder hier mehrteiligen Bremssattel 32 (mit einem Bremssatteldeckel 20) auf, welcher eine Zuspannvorrichtung aufnimmt. Der Bremssattel 32 ist mittels einer Sattelschiebeführung 38/39 an einem achsfesten Bremsträger 31 verschieblich geführt.

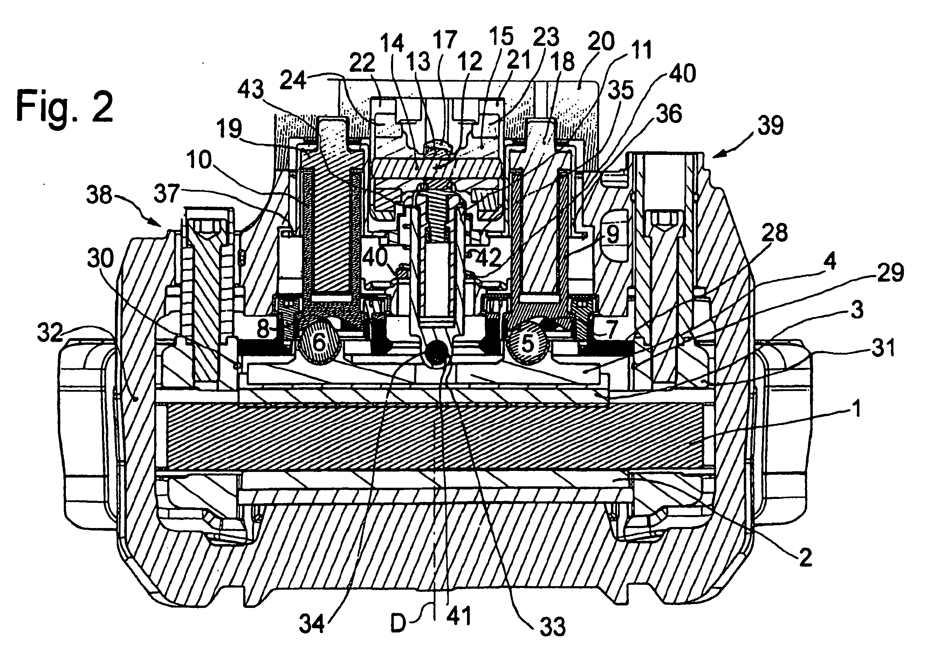

Ein Elektromotor 27 am Bremsengehäuse 20 wirkt über einen Gewindetrieb, hier einen Kugelgewindetrieb 26, auf einen vorzugsweise in einer Exzenterdrehachse E exzentrisch im Bremssattel 20 gelagerten Bremsdrehhebel 15, der infolge einer Betätigung durch den Kugelgewindetrieb um eine senkrecht zur Bremsscheibendrehachse D (siehe Fig. 2) ausgerichtete Drehachse verschwenkbar ist.

Der Bremsdrehhebel 15 wirkt wiederum über wenigstens einen Bremsstempel 11 direkt oder über eine Druckplatte auf einen zuspannseitigen Bremsbelag 3.

Dabei sind der Bremsstempel 11 und der Bremsdrehhebel 15 sowie der Bremsstempel 11 und die Druckplatte 4 gelenkig miteinander derart verbunden, dass der Bremsstempel 11 beim Zuspannen der Scheibenbremse ganz oder zumindest im wesentlichen einer Bewegung des zuspannseitigen Bremsbelages 3 in Umfangsrichtung der Bremsscheibe 1 folgen kann.

Die Zuspannvorrichtung ist dabei derart ausgelegt, dass auf den Bremsbelag 3 Zug- und Druckkräfte einwirken können, d.h. der Elektromotor kann zum Zuspannen und Lösen der Bremse genutzt werden.

Der betätigungsseitige Bremsbelag 3 ist in der Druckplatte 4 aufgenommen.

Es wird nun auch Bezug auf Fig. 2 genommen, welche eine weitere Schnittansicht der Scheibenbremse aus Fig. 1 ist.

Die Druckplatte 4 ist parallel zur Bremsscheibenreibfläche verschieblich und steht über in ihr gelagerten Rollkörper, hier Kugeln 5 und 6, mit Rampen 7 und 8 von axial längenveränderlichen Druckstempeln bzw. Nachstellkolben 9 und 10 in Wirkverbindung, die in einem spitzen Winkel von mehr als 0 und weniger als 90° zur Bremsscheibenreibfläche ausgerichtet sind. Die Rampen könnten auch oder ergänzend auch in der Druckplatte 4 ausgebildet sein. Die Kugeln (oder sonstige Rollkörper) wären in diesem Fall in kalottenartigen Ausnehmungen der Druckstempel geführt, die dennoch Teil der Selbstverstärkungseinrichtung im Sinne des Anspruchs 1 wären.

An der Druckplatte 4 ist - wie bereits erwähnt - der Betätigungsstößel 11 zur Übertragung der in Richtung der Bremsscheibe wirkenden Druck -und Zugkräften angelenkt.

Diese Anlenkung erfolgt hier mittels eines Bolzens 33 und einem Gabelkopf 34 in einem Gelenkpunkt 41.

Diese gelenkige Verbindung erlaubt bei einer Umfangsverschiebung der Druckplatte 4 eine Schwenkbewegung eines Betätigungsstößels 11 um den Kugelmittelpunkt 12 (der auf der Exzenterdrehachse E - Fig. 1 - liegt) eines Kalottenlagers 13.

Das Kalottenlager 13 ist auf der Exzenterachse 14 des Bremsdrehhebels 15 zur Übertragung der Betätigungskräfte auf den Betätigungsstößel 11 aufgenommen.

Der Betätigungsstößel 11 ist mit einem Gewindestößel 16 verschraubt, wobei der Gewindestößel 16 wiederum fest mit einem Gelenklagergehäuse 17 verbunden ist.

Um den Betätigungsstößel 11 herum ist eine Feder 42 angeordnet, deren Längsachse in diesem Beispiel koaxial mit der Längsachse des Betätigungsstößels 11 verläuft. Diese Feder 42 ist hier als Druckfeder ausgebildet und zwischen einem auf der Seite der Bremsscheibe 1 angeordneten gehäusefesten Auflager 40 und einer der Bremsscheibe 1 abgewandten mit dem Betätigungsstößel 11 verbundenen Anlage 43 angeordnet. Die Anlage 43 ist in Gestalt einer Zahnglocke 35 ausgeführt. An dieser Anlage 43 stützt sich das obere Ende der Feder 42 ab wohingegen das Auflager 40 mit einer Schräge ausgebildet ist, deren Auflagerfläche in einer Ebene in einem Winkel zur Drehebene der Bremsscheibe 1 verläuft und auf welcher sich das untere Ende der Feder 42 abstützt.

Die originäre Aufgabe der Feder 42 ist es, nach einer Bremsbetätigung die gesamte Betätigungseinheit aus Betätigungsstempel 11, Bremsbelageinheit einschließlich Druckplatte 4 und Rollkörpern 5/6 des Keilsystems gegen die Rückstellung hemmende Widerstände zurückzuziehen. Solche Widerstände können Reibwiderstände im Betätigungs- und Antriebsmechanismus oder magnetische Haltemomente (Polrastmomente) am antreibenden Elektromotor sein. Eine zweite originäre Aufgabe der Feder 42 besteht darin, im nicht betätigten Zustand die Betätigungseinheit gegen wirkende Rüttelkräfte unter ausreichend hoher Vorspannung zu halten, um Verschleiß an den beweglichen Bauteilen zu vermeiden.

Die weitere Aufgabe der Feder 42, eine Kraft in Umfangsrichtung der Bremsscheibe 1 zu erzeugen, um die Kugeln 5 und 6 ständig in Kontakt mit den Rampen 7 und 8 zu halten, wird weiter unten beschrieben.

Der Betätigungsstößel 11 bildet mit dem Gewindestößel 16 einen zum Zwecke der Verschleiß - Nachstellung längenveränderlichen Stößel bzw. Nachstellkolben.

In gleicher Weise sind die beiden Druckstempel 9 und 10 mit den Gewindespindeln 18 und 19, welche die Abstützkraft der Druckstempel 9/10 auf das Bremsengehäuse bzw. einen Bremssattel 20 übertragen, verschraubt.

Die Gewindespindeln 18/19 sind mit dem Gewindestößel 17 durch ein Synchronisationsgetriebe verbunden. Hierdurch wird erreicht, dass die Antriebs - Drehbewegung des Nachstellerantriebs nur synchron auf die beiden Druckstempel 9/10 und den Betätigungsstößel 11 einwirkt.

Der Bremsdrehhebel 15 ist in den zwei Lagerböcken 21/22 mittels zweier Wälzlager 23/24 reibungsarm gelagert.

Die Lagerböcke 21/22 sind mit dem Bremsengehäuse 20 fest verbunden.

Am Hebelarm des Bremsdrehhebels 15 ist eine Spindel 25 eines Kugelgewindetriebes 26 zur Übertragung von Zug- und Druck - Betätigungskräften befestigt.

Der Kugelgewindetrieb 26 wird zur Betätigung der Bremse von dem Elektromotor 27 angetrieben.

Die Druckstempel 9/10 sind an ihrem der Bremsscheibe 1 zugewandten Ende in einer Führungsplatte 28 derart aufgenommen bzw. ausgestaltet, dass auf die Rampen 7/8 parallel zur Bremsscheibenreibfläche wirkende Abstützkräfte in die Führungsplatte 28 eingeleitet und von dieser, je nach Drehrichtung der Bremsscheibe, an den Führungsflächen 29 oder 30 auf den Bremsträger 31 abgeleitet werden.

Die Führung der Druckstempel 9/10 und des Betätigungsstößels 11 erfolgt an deren zu Bremsscheibe 1 gewandten Ende ausschließlich über die Führungsplatte 28 und den Bremsträger 31.

Der Bremssattel 32 und die Nachstelleinrichtung 35/36/37 sowie die Sattelschiebeführung 38/39 sind von den Umfangskräften entlastet.

Dabei sind die Bremsstempel 9, 10 vorzugsweise einfach direkt an der Führungsplatte 28 verschraubt.

### Nachfolgend sei beispielhaft eine Bremsung mit dieser Scheibenbremse beschrieben:

Beim Erkennen eines Bremswunsches über die Betätigung des Bremspedals und damit des mit dem Bremspedal verbundenen Brems - Sollwertgebers wird der Elektromotor 27 durch das elektronische Bremssteuergerät zur Erzeugung einer Zustellbewegung des Kugelgewindetriebes 26 angesteuert.

Die Spindel 25 des Kugelgewindetriebes 26 bewegt den Hebelarm des Bremsdrehhebels 15 in Richtung der Bremsscheibe 1.

Der Bremsdrehhebel 15 wird dabei in seinen Lagern 23/24 verschwenkt und bewegt damit auch seine Exzenterwelle 14 und damit das Kalottenlager 13 entsprechend der Hebelübersetzung in Richtung der Bremsscheibe. Die Bewegung des Kalottenlagers wird über den Betätigungsstößel bzw. über die Bauteilkette 12 => 13 => 17 => 16 => 11 =>33 => 34 auf die Druckplatte 4 übertragen.

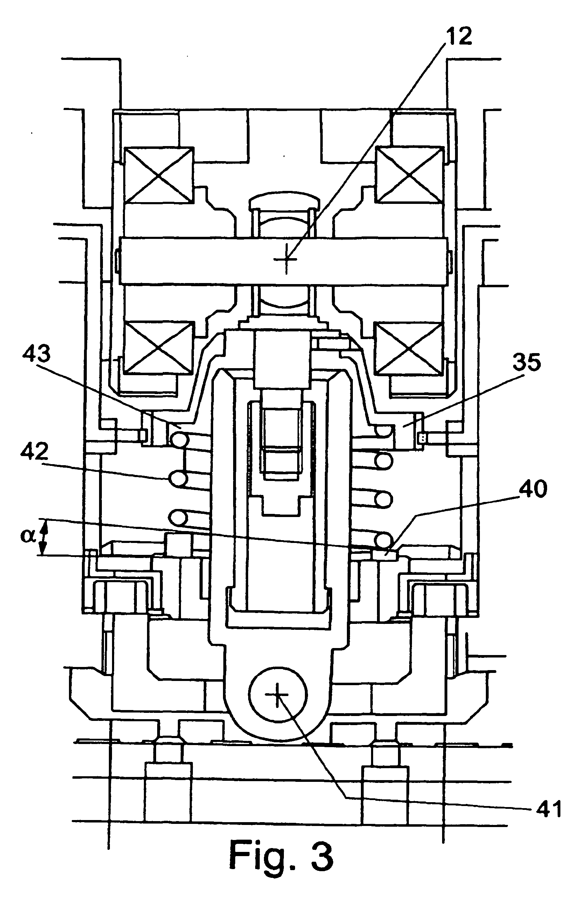

Aus Fig. 2 und der vergrößerten Darstellung in Fig. 3 ist erkennbar, dass die Feder 42 auf Grund ihres relativ großen Auflagedurchmessers eine stark ausrichtende Wirkung auf den Betätigungsstößel 11 ausübt. Im nicht betätigten Zustand der Bremse ist die Betätigungseinheit in ihrer Position fixiert, da die in der Druckplatte 4 in Lagerschalen mit den Rampen 7 und 8 fixierten Rollkörper, nämlich die Kugeln 5 und 6, mit der wirkenden Rückstellfederkraft in eine stabile Ruheposition in den tiefsten Punkt der Rampen 7 und 8 des Keilsystems gedrückt werden.

Die Druckplatte 4 wird dabei zunächst zur Überwindung des Lüftspieles mit dem Bremsbelag 3 rechtwinklig zu deren Reibfläche auf die Bremsscheibe 1 zu bewegt. Bei Anlegen des Bremsbelages 3 an die Reibfläche der Bremsscheibe 1 werden der Bremsbelag 3 und die damit verbundene Druckplatte 4 durch die entstehende Reibkraft von der Bremsscheibe 1 in deren Drehrichtung mitbewegt.

Die Richtwirkung der Feder 42 wird nun erfindungsgemäß ausgenutzt, um die Kugeln 5 und 6 ständig mit den Rampen 7 und 8 in Kontakt zu halten, um schlagartiges Zusammenstoßen dieser Kontaktstellen zu unterbinden. Durch die schräge Auflage 40 mit einem Winkel α zur Bremsscheibendrehachse an dem unteren Ende der Feder 42 wird erreicht, dass das Einspannmaß der Feder 42 auf einer Seite geringer ist als auf der gegenüberliegenden Seite. Folglich wirkt auch auf die abstützende, mit ihrer Anlage 43 als Federteller wirkende Zahnglocke 35 eine ungleiche Kraft, welche ein Kippmoment an der Zahnglocke 35 und an dem damit verbundenen Betätigungsstößel 11 bewirkt. Der Betätigungsstößel 11 hat nun die Tendenz, um den Kugelmittelpunkt 12 des Kalottenlagers 13 zu kippen. Dabei übt er in dem in der Fig. 2/3 unten liegenden Gelenkpunkt 41 eine parallel zur Bremsscheibe 1, also in Umfangsrichtung, wirkende Kraft auf die Bremsbelageinheit aus.

Bei der erfolgenden Bremsbetätigung bewirkt nun diese Umfangskraft, dass bei der Bewegung der Belageinheit in Richtung auf die Bremsscheibe 1 die Belageinheit gleichzeitig so weit in Umfangsrichtung verschoben wird, dass die Kugeln 5/6 an den Rampen 7/8 entlang geführt werden, wobei sie mit diesen ständig in Kontakt stehen. Dieser Kontakt wird während des gesamten Bremszustellung beibehalten.

Die Kugeln 5/6 bewirken dabei auf die Druckplatte 4 zusätzlich zu deren Umfangsbewegung eine verstärkte Bewegung auf die Bremsscheibe zu. Die vom Betätigungsstößel 11 eingeleitete Anlegekraft wird dabei entsprechend der erhöhten Aufspreizung des Bremssattels 32 verstärkt. Infolge der Umfangsverschiebung der Druckplatte 4 führt der Betätigungsstößel 1 eine Schwenkbewegung um das Kalottenlager 13 und den Bolzen 33 aus. Der reaktionsseitige Bremsbelag 2 wird wie bei Schiebsattelbremsen üblich durch infolge einer Verschiebung des Bremssattels an die Bremsscheibe 3 gelegt. Hier muß keine Selbstverstärkungseinrichtung vorgesehen sein.

Bei derartigem geführten Anlegen des Bremsbelages 3 an die Bremsscheibe 1, wobei die Kugeln 5/6 in ständigem Kontakt mit den Rampen 7/8 stehen, erfolgt keine schlagartige Bewegung der Belageinheit, sondern ein weicher Anstieg der Bremskraft.

Die Erfindung ist nicht auf das beschriebenen Beispiel beschränkt. Es sind selbstverständlich Änderungen und Modifikationen im Rahmen der beigefügten Ansprüche ausführbar.

So ist es zum Beispiel möglich, als Alternative zu der Schräge des Auflagers 40 die Feder 42 mit entsprechend schrägen Enden zu versehen. Dabei können beide Federenden oder nur eines derart ausgebildet sein.

Ebenfalls kann die Anlage 43 der Zahnglocke 35 mit einer Schräge versehen sein.

Es ist auch denkbar, dass die Feder 42 so angeordnet ist, dass ihre Längsachse in einem Winkel zu der Längsachse des Betätigungsstößels 11 verläuft.

### Bezugszeichen

- Bremsscheibe: 1
- Bremsbeläge: 2,3
- Druckplatte: 4
- Kugeln: 5 und 6
- Rampen: 7 und 8
- Druckstempel: 9 und 10
- Betätigungsstößel: 11
- Kugelmittelpunkt: 12
- Kalottenlager: 13
- Exzenterachse: 14
- Bremsdrehhebel: 15
- Gewindestößel: 16
- Gelenklagergehäuse: 17
- Gewindespindeln: 18 und 19
- Bremssattel: 20
- Lagerböcke: 21/22
- Wälzlager: 23/24
- Spindel: 25
- Kugelgewindetrieb: 26
- Elektromotor: 27
- Führungsplatte: 28
- Führungsflächen: 29 oder 30
- Bremsträger: 31
- Bremssattel: 32
- Bolzen: 33
- Gabelkopf: 34
- Nachstelleinrichtung mit:: 35/36/37
- Zahnglocke: 35
- Zahnrad: 36/37
- Sattelschiebeführung: 38/39
- Auflager: 40
- Gelenkpunkt: 41
- Feder: 42
- Anlage: 43
- Exzenterdrehachse: E

## Patentansprüche

1. Elektromechanisch betätigbare Scheibenbremse in selbstverstärkender Bauart, mit
a. einem Bremssattel (32, 20), wenigstens einem zuspannseitigen und einem reaktionsseitigen Bremsbelag (2, 3) und einer Bremsscheibe (1),
b. einem elektromechanischen Antrieb (27) und einer Zuspannvorrichtung zum Zuspannen des Bremsbelages, die einen Bremsdrehhebel (15) und eine Selbstverstärkungseinrichtung aufweist,
c. wobei der Bremsdrehhebel (15) auf einen ein- oder mehrteiligen Betätigungsstößel (11) einwirkt, welcher direkt oder indirekt über eine Druckplatte (4) auf den zuspannseitigen Bremsbelag einwirkt, und
d. vorzugsweise wenigstens einer Nachstellvorrichtung (18, 9; 19, 10) zum Nachstellen von Belag- und/oder Scheibenverschleiß,
e. der zuspannseitige Bremsbelag (3) oder eine Bremsbelageinheit, die aus dem zuspannseitigen Bremsbelag (3) und der Druckplatte (4) besteht, ständig in Umfangsrichtung mit einer Federkraft wenigstens einer Feder (42) beaufschlagt ist.
**dadurch gekennzeichnet, dass**
f. der Betätigungsstößel (11) am Bremsdrehhebel (15) und an der Druckplatte (4) oder dem zuspannseitigen Bremsbelag (3) schwenkbar gelagert ist, und dass die Feder (42) den Betätigungsstößel (11) umhüllt.

2. Scheibenbremse nach Anspruch 1, **dadurch gekennzeichnet, dass** die Richtung der Federkraft der Feder (42) der Drehrichtung der Bremsscheibe bei Vorwärtsfahrt entspricht.

3. Scheibenbremse nach Anspruch 1 oder 2, **dadurch gekennzeichnet, dass** die Feder (42) zwischen einem auf der Seite der Bremsscheibe (1) angeordneten gehäusefesten Auflager (40) und einer der Bremsscheibe (1) abgewandten mit dem Betätigungsstößel (11) verbundenen Anlage (43) angeordnet ist.

4. Scheibenbremse nach einem der vorstehenden Ansprüche, **dadurch gekennzeichnet, dass** zumindest das gehäusefeste Auflager (40) der Feder (42) mit einer Schräge, deren Auflagerfläche in einer Ebene in einem Winkel α > o° zur Drehebene der Bremsscheibe (1) winklig verläuft, versehen ist.

5. Scheibenbremse nach einem der vorstehenden Ansprüche, **dadurch gekennzeichnet, dass** der Winkel α zwischen 1° und 30° liegt.

6. Scheibenbremse nach einem der vorstehenden Ansprüche, **dadurch gekennzeichnet, dass** der Winkel α zwischen 5° und 20° liegt.

7. Scheibenbremse nach einem der vorstehenden Ansprüche, **dadurch gekennzeichnet, dass** die Feder (42) mit zumindest einem angeschrägten Federende, dessen Auflagerfläche in einer Ebene in einem Winkel größer 0° zur Drehebene der Bremsscheibe (1) verläuft, ausgebildet ist.

8. Scheibenbremse nach einem der vorstehenden Ansprüche, **dadurch gekennzeichnet, dass** die Feder (42) koaxial zu dem Betätigungsstößel (11) angeordnet ist.

9. Scheibenbremse nach einem der vorstehenden Ansprüche, **dadurch gekennzeichnet, dass** die Feder (42) mit ihrer Längsachse in einem Winkel größer 0° zur Längsachse des Betätigungsstößels (11) angeordnet ist.

## Claims

1. Electromechanically actuated disc brake in self-amplifying construction, having
a. a brake calliper (32, 20), at least one application-side and one reaction-side brake pad (2, 3) and a brake disc (1),
b. an electromechanical drive (27) and an application device for applying the brake pad which comprises a brake rotary lever (15) and a self-amplifying device,
c. wherein the brake rotary lever (15) acts on a one-part or multi-part actuating ram (11) which acts directly or indirectly via a pressure plate (4) on the application-side brake pad, and
d. preferably at least one adjusting device (18, 9; 19, 10) for adjusting pad and / or disc wear,
e. the application-side brake pad (3) or a brake pad unit which consists of the application-side brake pad (3) and the pressure plate (4) is constantly impacted in the peripheral direction with a spring force of at least one spring (42),
**characterised in that**
f. the actuating ram (11) is pivotably mounted on the brake rotary lever (15) and on the pressure plate (4) or the application-side brake pad (3) and the spring (42) surrounds the actuating ram (11).

2. Disc brake according to claim 1, **characterised in that** the direction of the spring force of the spring (42) corresponds to the rotation direction of the brake disc during forward travel.

3. Disc brake according to claim 1 or 2, **characterised in that** the spring (42) is arranged between a support (4) secured to the housing and arranged on the side of the brake disc (1) and an installation (43) facing away from the brake disc (1) and connected to the actuating ram (11).

4. Disc brake according to one of the preceding claims, **characterised in that** at least the housing-secure support (40) of the spring (42) is provided with an incline, of which the bearing surface extends angularly in a plane at an angle α > 0° to the rotation plane of the brake disc (1).

5. Disc brake according to one of the preceding claims, **characterised in that** the angle α lies between 1° and 30°.

6. Disc brake according to one of the preceding claims, **characterised in that** the angle α lies between 5° and 20°.

7. Disc brake according to one of the preceding claims, **characterised in that** the spring (42) is formed with at least one chamfered spring end, of which the bearing surface extends in a plane at an angle of greater than 0° to the rotation plane of the brake disc (1).

8. Disc brake according to one of the preceding claims, **characterised in that** the spring (42) is arranged coaxially with the actuating ram (11).

9. Disc brake according to one of the preceding claims, **characterised in that** the spring (42) is arranged with its longitudinal axis at an angle of greater than 0° to the longitudinal axis of the actuating ram (11).

## Revendications

1. Frein à disque à actionnement électromécanique du type à renfort automatique, comprenant
a. un étrier de frein (32, 20), au moins une garniture de frein (2, 3) respective du côté d'application et du côté de réaction, ainsi qu'un disque de frein (1),
b. un moyen de d'entraînement électromécanique (27) et un dispositif de serrage de frein à serrer ladite garniture de frein, qui comprend un levier rotatif de frein (15) et un moyen à renfort automatique,
c. dans lequel ledit levier rotatif de frein (15) agit sur un poussoir d'actionnement (11) à une partie ou à plusieurs parties, qui agit sur ladite garniture de frein du côté de serrage soit directement, soit indirectement via une plaque de pression (4), et
d. de préférence au moins un dispositif de réglage (18, 9 ; 19, 10) pour le réajustage de l'usure de garniture et/ou du disque de frein,
e. et dans lequel ladite garniture de frein du côté de serrage (3) ou une unité à garniture de frein, qui consiste en ladite garniture de frein (3) du côté de serrage et en ladite plaque de pression (4), se trouve sous l'action permanente en sens périphérique d'une tension d'au moins un ressort (42),
**caractérisé en ce que**
f. ledit poussoir d'actionnement (11) s'appuie audit levier rotatif de frein (15) et à ladite plaque de pression (4) ou à ladite garniture de frein du côté de serrage de façon pivotable, et **en ce que** ledit ressort (42) enveloppe ledit poussoir d'actionnement (11).

2. Frein à disque selon la revendication 1, **caractérisé en ce que** le sens de la tension dudit ressort (42) correspond au sens de rotation du disque de frein en marche en avant.

3. Frein à disque selon la revendication 1 ou 2, **caractérisé en ce que** ledit ressort (42) est disposé entre un support (40) solidaire du cartier, qui est disposé du côté de ladite disque de frein (1) et un appui (43) opposée à ladite disque de frein (1) et relié audit poussoir d'actionnement (11).

4. Frein à disque selon une quelconque des revendications précédentes, **caractérisé en ce qu'**au moins ledit support (40) dudit ressort (42), qui est solidaire du carter, est pourvu d'une pente dont l'aire d'appui dans un plan s'étend, de façon angulaire, à un angle α > 0° relatif au plan de rotation de ladite disque de frein (1).

5. Frein à disque selon une quelconque des revendications précédentes, **caractérisé en ce que** ledit angle α a une valeur entre 1° et 30°.

6. Frein à disque selon une quelconque des revendications précédentes, **caractérisé en ce que** ledit angle α a une valeur entre 5° et 20°.

7. Frein à disque selon une quelconque des revendications précédentes, **caractérisé en ce que** ledit ressort (42) est conçu d'au moins une extrémité de ressort biseautée, dont l'aire d'appui dans un plan s'étend à un angle plus grand que 0° relatif au plan de rotation de ladite disque de frein (1).

8. Frein à disque selon une quelconque des revendications précédentes, **caractérisé en ce que** ledit ressort (42) est disposé en position coaxiale relativement audit poussoir d'actionnement (11).

9. Frein à disque selon une quelconque des revendications précédentes, **caractérisé en ce que** ledit ressort (42) est disposé en une telle position que son axe longitudinal s'étend à un angle plus grand que 0° relativement à l'axe longitudinal dudit poussoir d'actionnement (11).
